# EUROPEAN PATENT APPLICATION

(11) **EP 2 947 347 A1**
(43) Date of publication of application: **25.11.2015**
(21) Application number: 13872196.4
(22) Date of filing: 29.10.2013
(51) Int. Cl.: F16H 15/14

(54) **MULTI-DISK TRANSMISSION**

(30) Priority: 18.01.2013 JP 2013007851
(71) Applicant: Jatco Ltd, Fuji-shi, Shizuoka 417-8585 (JP)
(72) Inventor: TANGE, Hiroshi, Fuji-shi Shizuoka 417-8585 (JP)
(74) Representative: Hoefer & Partner Patentanwälte mbB
(86) International application number: PCT/JP2013/079316
(87) International publication number: WO 2014/112177

(57) **Abstract**

A multi-disc transmission includes a primary disc provided on an input shaft, a secondary disc provided on an output shaft, the secondary disc including a disc overlap region overlapping the primary disc, a pair of pressing rollers arranged in the disc overlap region with the primary disc and the secondary disc interposed therebetween, the pair of pressing rollers being supported on shaft portions via needle bearings, a shifting actuator configured to move the pair of pressing rollers between the input shaft and the output shaft, and a pressing mechanism configured to press the pair of pressing rollers against the primary disc and the secondary disc by causing a pressing force to act on the pair of pressing rollers.

## Description

### TECHNICAL FIELD

The present invention relates to a multi-disc transmission.

### BACKGROUND ART

JP2010-53995A discloses a multi-disc transmission in which a disc overlap region is provided by partially overlapping a primary disc provided on an input shaft and a secondary disc provided on an output shaft and the both discs are brought into contact by being sandwiched by a pair of pressing rollers in this region, thereby transmitting the rotation of the input shaft to the output shaft.

In the multi-disc transmission, speed change is realized by changing a position where the both discs are sandwiched by the pair of pressing rollers. Specifically, a speed ratio changes toward a Low side (high speed ratio side) if the sandwiched position of the both discs is set closer to the input shaft and changes toward a High side (low speed ratio side) if the sandwiched position is set closer to the output shaft.

### SUMMARY OF INVENTION

In the multi-disc transmission disclosed in JP2010-53995A, the pressing rollers are supported by ball bearings.

However, in this configuration, diameters of the ball bearings need to be increased to reduce a rotation speed and a radial allowable load needs to be increased in order to ensure the life of the ball bearings, which leads to larger diameters of the pressing rollers and, consequently, the enlargement of the transmission.

Further, there is a difference in pressing force by the pressing rollers between the case where the pressing rollers are pressed in a state where the both discs are located right below balls and the case where the pressing rollers are pressed in a state where the both discs are right below clearances between balls, whereby a torque transmittable by the transmission varies.

The present invention aims to miniaturize pressing rollers and suppress a variation of a pressing force in a multi-disc transmission.

According to an aspect of the present invention, a multi-disc transmission, includes an input shaft configured such that rotation from a power source is input to the input shaft; an output shaft arranged in parallel to the input shaft; a primary disc provided on the input shaft; a secondary disc provided on the output shaft, the secondary disc including a disc overlap region overlapping the primary disc, a pair of pressing rollers arranged in the disc overlap region with the primary disc and the secondary disc interposed therebetween, the pair of pressing rollers being supported on shaft portions via needle bearings; a shifting actuator configured to move the pair of pressing rollers between the input shaft and the output shaft; and a pressing mechanism configured to press the pair of pressing rollers against the primary disc and the secondary disc by causing a pressing force to act on the pair of pressing rollers.

The needle bearing has a large allowable load and a high allowable rotation speed as compared with ball bearings. Thus, if a requested allowable load and an allowable rotation speed are the same, a needle bearing having a smaller diameter than in the case of using a ball bearing can be used. Thus, according to the above-mentioned aspect, the miniaturization of the pressing roller and, consequently, the miniaturization of the transmission can be realized.

Further, since the needle bearing includes many needles despite a small diameter thereof, a difference in force for pressing the discs by the pressing rollers is small between the case where the pressing rollers are pressed in a state where the discs are right below the needles and the case where the pressing rollers are pressed in a state where the discs are located right below clearances between the needles. Thus, according to the above-mentioned aspect, a variation of the pressing force can be suppressed.

### BRIEF DESCRIPTION OF DRAWINGS

FIG. 1 is an overall schematic diagram of a vehicle with a multi-disc transmission,
FIG. 2 is a view of the multi-disc transmission viewed from an engine side,
FIG. 3 is a bottom view of FIG. 2,
FIG. 4 is a sectional view along IV-IV of FIG. 2,
FIG. 5 is a sectional view along V-V of FIG. 2, and
FIG. 6 is a view showing a second embodiment of the present invention.

### DESCRIPTION OF EMBODIMENTS

Hereinafter, embodiments of the present invention are described with reference to the accompanying drawings.

### <First Embodiment>

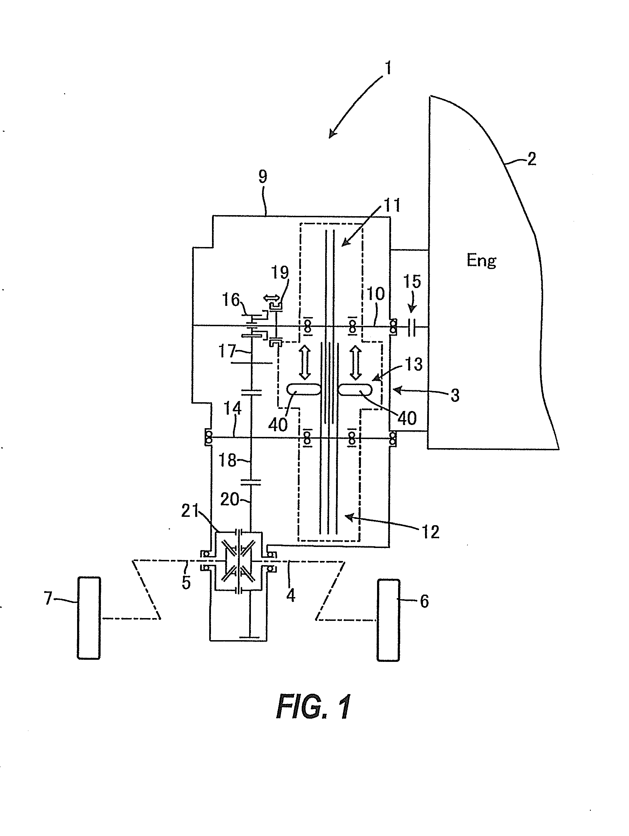

FIG. 1 is an overall schematic diagram of a vehicle with a multi-disc transmission according to a first embodiment of the present invention.

The vehicle 1 includes an engine 2 as a power source, a multi-disc transmission (hereinafter, referred to as a "transmission") 3, left and right drive shafts 4, 5 and left and right drive wheels 6, 7.

The transmission 3 includes a transmission case 9, an input shaft 10, a primary disc 11, a secondary disc 12, a pressing mechanism 13, an output shaft 14, a dry starting clutch 15, a reverse gear 16, a reverse idler gear 17, an output gear 18, a synchronization mechanism 19, a final gear 20 and a differential gear unit 21.

The input shaft 10 and the output shaft 14 are arranged in parallel and rotatably supported by the transmission case 9.

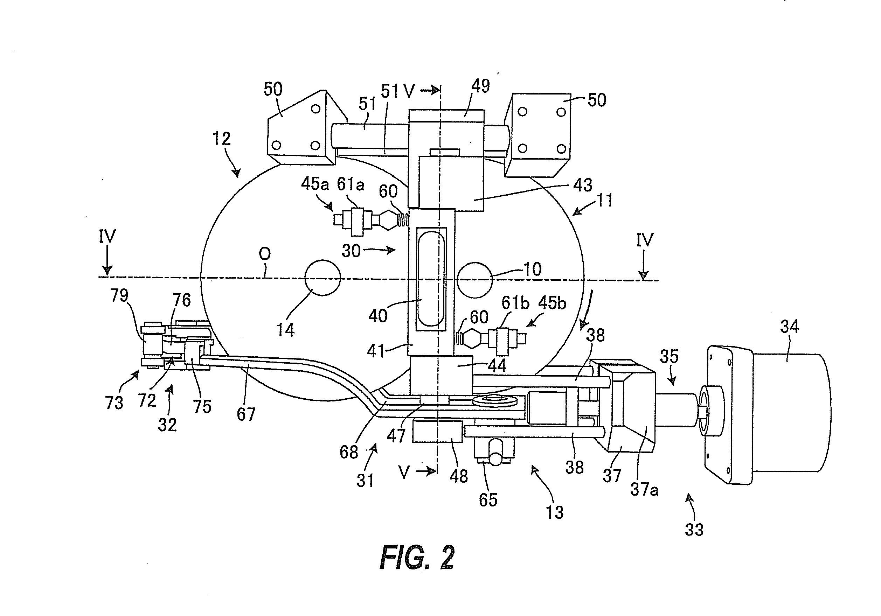

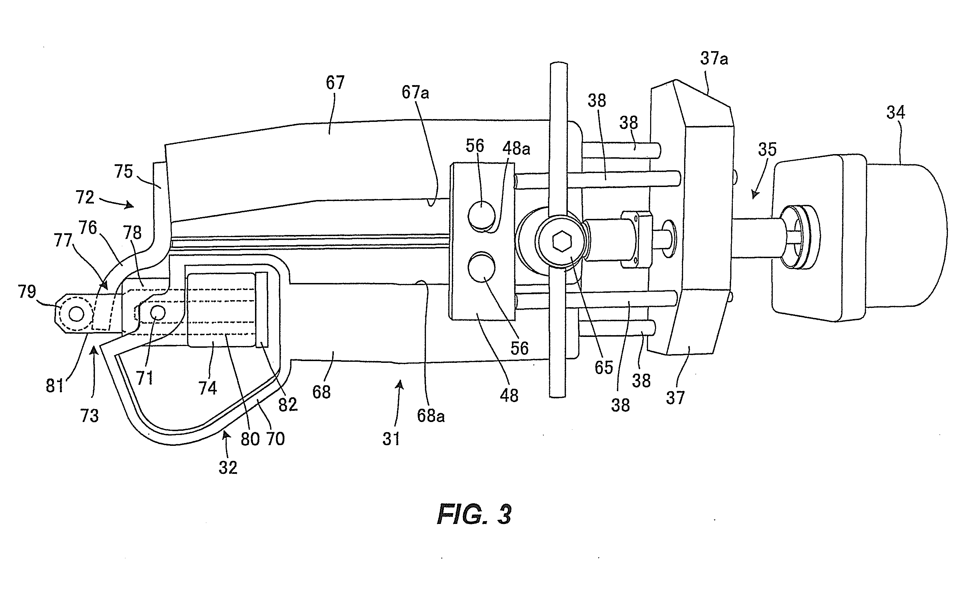

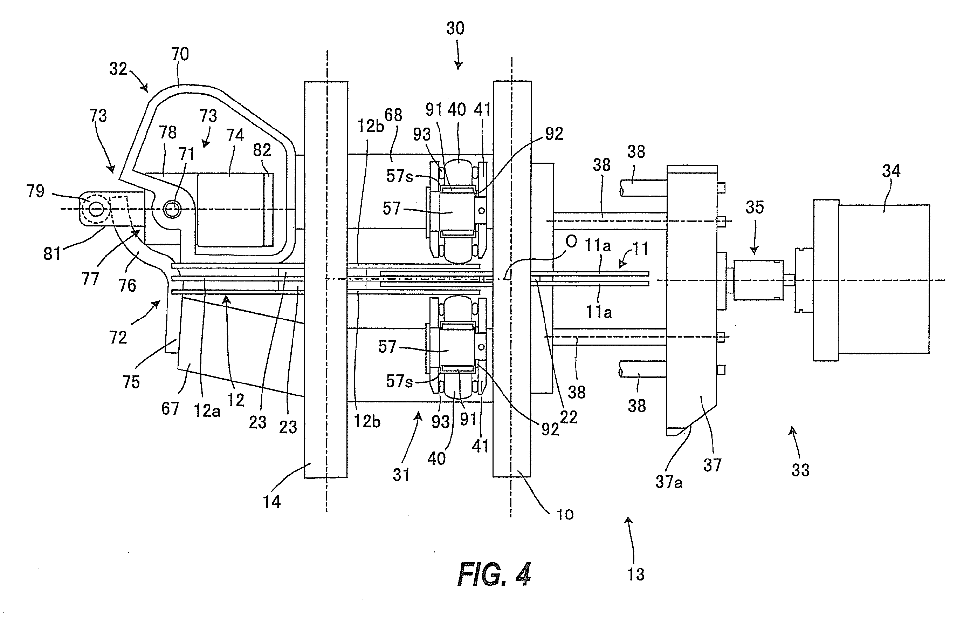

FIG. 2 is a view of the transmission 3 viewed from the side of the engine 2. FIG. 3 is a bottom view of FIG. 2. FIG. 4 is a sectional view along IV-IV of FIG. 2. It should be noted that some members are not shown in FIG. 2 and subsequent figures for the sake of description.

The primary disc 11 is configured by mounting two circular discs 11 a on the input shaft 10 while arranging them side by side in an axial direction of the input shaft 10, and integrally rotates with the input shaft 10. A spacer 22 is provided between the two discs 11a, which are arranged at a predetermined distance from each other in the axial direction of the input shaft 10 by the spacer 22. The primary disc 11 is so arranged that an outer peripheral end of discs 11a is proximate to the output shaft 14. The primary disc 11 rotates together with the input shaft 10 in an arrow direction of FIG. 2.

The secondary disc 12 includes a center disc 12a and two side discs 12b provided at opposite surface sides of the center disc 12a. The secondary disc 12 is configured by mounting the center disc 12a and the side discs 12b on the output shaft 14 while arranging them side by side in an axial direction of the output shaft 14, and integrally rotates with the output shaft 14. Spacers 23 are provided between the center disc 12a and the side discs 12b. The center disc 12a and the side disc 12b are arranged at a predetermined distance from each other in the axial direction of the output shaft 14 by the spacer 23. The secondary disc 12 is so arranged that an outer peripheral end of the center disc 12a and those of the side discs 12b are proximate to the input shaft 10.

The center disc 12a is a circular disc and thicker than the side discs 12b and the discs 11a of the primary disc 11 in the axial direction of the output shaft 14.

The discs 11 a of the primary disc 11 are arranged between the center disc 12a and the side disc 12b of the secondary disc 12. The primary disc 11 and the secondary disc 12 form a disc overlap region, where the discs 11, 12 partially overlap, between the input shaft 10 and the output shaft 14.

In the disc overlap region, clearances are formed between the discs 11a of the primary disc 11 and the center disc 12a in a state where a pressing force by the pressing mechanism 13 to be described in detail below is not acting.

Contrary to this, in a state where the pressing force by the pressing mechanism 13 is acting, the primary disc 11 and the secondary disc 12 are elastically deformed into contact, thereby forming a torque transmission contact portion. In the transmission 3, the transmission of the rotation from the input shaft 10 to the output shaft 14 is realized by forming the torque transmission contact portion between the primary disc 11 and the secondary disc 12. Further, speed change is realized by changing the positon of the torque transmission contact portion along an axial center connecting line O. The axial center connecting line O is a line connecting an axial center of the input shaft 10 and that of the output shaft 14 and perpendicular to the input shaft 10 and the output shaft 14.

The pressing mechanism 13 includes a pair of pressing roller mechanisms 30, a pair of disc clamping mechanisms 31, a pressing force adjusting mechanism 32 and a shifting actuator 33.

The shifting actuator 33 is an actuator for moving the pressing roller mechanisms 30 along the axial center connecting line O and includes an electric motor 34, a ball screw mechanism 35 and a bracket 37.

The ball screw mechanism 35 has one end part coupled to a rotary shaft of the electric motor 34 and rotates in a forward or reverse direction according to a rotation direction of the rotary shaft of the electric motor 34. The ball screw mechanism 35 extends in a direction of the axial center connecting line O.

When the ball screw mechanism 35 rotates, the bracket 37 moves along an axial direction of the ball screw mechanism 35, i.e. along the axial center connecting line O according to the rotation of the ball screw mechanism 35. A tapered surface 37a whose distance from the ball screw mechanism 35 becomes shorter toward the electric motor 34 is formed on a surface of the electric motor 34 on the side of the engine 2. When the bracket 37 is reciprocated by the electric motor 34, an unillustrated push rod following the tapered surface 37a is reciprocated and a release lever of the dry starting clutch 15 is driven by the pushed rod to engage and release the dry starting clutch 15.

The bracket 37 is coupled to second supporting portions 44 and roller follower support blocks 48 of the pressing roller mechanisms 30 via first shafts 38 extending in the direction of the axial center connecting line O. When the ball screw mechanism 35 is rotated by the electric motor 34, the bracket 37 moves forward and backward along the direction of the axial center connecting line O according to the rotation direction of the ball screw mechanism 35 and the pressing roller mechanisms 30 move forward and backward along the direction of the axial center connecting line O integrally with the bracket 37 and the first shafts 38.

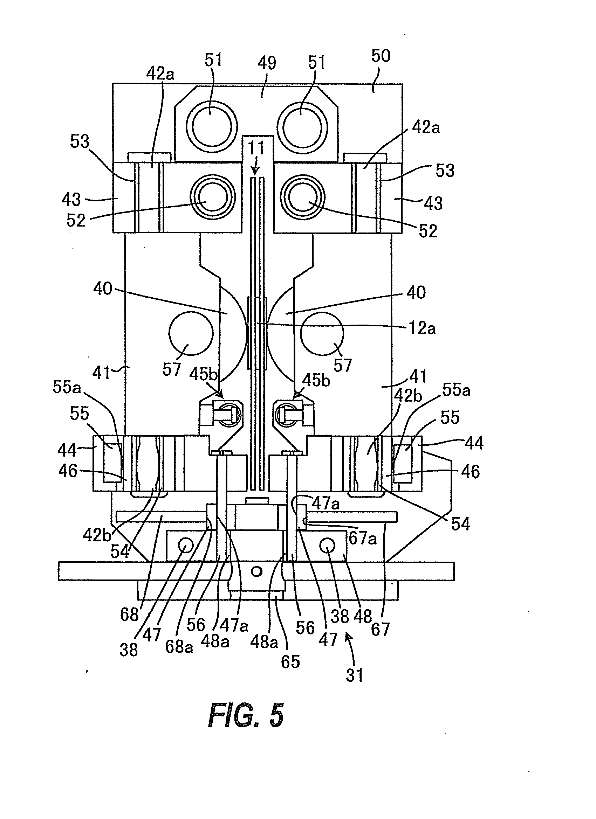

FIG. 5 is a sectional view along V-V of FIG. 2.

The pressing roller mechanism 30 includes a pressing roller 40, a holding portion 41, tilt shafts 42a, 42b, a first supporting portion 43, the second supporting portion 44, a support block 46 and a first roller follower 47.

The pressing roller mechanisms 30 are arranged with the primary disc 11 and the secondary disc 12 interposed therebetween, and mounted on a guide block 49. The guide block 49 is slidably supported on two guide shafts 51 provided between two guide shaft blocks 50 mounted in the transmission case 9 and extending in the direction of the axial center connecting line O. That is, the pressing roller mechanisms 30 are slidably supported on the guide shafts 51 via the guide block 49 and moved in the direction of the axial center connecting line O by the shifting actuator 33 to form the torque transmission contact portion at a position where a target speed ratio is realized.

The tilt shafts 42a, 42b are respectively coaxially arranged in a direction intersecting with the direction of the axial center connecting line O. The tilt shaft 42a is supported by the first supporting portion 43 and the tilt shaft 42b is supported by the second supporting portion 44 via a bulging surface. The holding portion 41 for supporting the pressing roller 40 is mounted between the tilt shafts 42a and 42b.

The first supporting portion 43 is rotatably supported on the guide block 49 via a rotary shaft 52 provided in parallel to the guide shaft 51. The first supporting portion 43 supports the tilt shaft 42a via a needle bearing 53.

The second supporting portion 44 supports the tilt shaft 42b via the supporting block 46 and a needle bearing 54. A bush 55 having a spherical tip portion 55a is provided between the second supporting portion 44 and the supporting block 46 in the axial direction of the input shaft 10, whereby a clearance is formed between the second supporting portion 44 and the supporting block 46. The clearance is located closer to the primary disc 11 than the bush 55 in the axial direction of the input shaft 10 and the tip portion 55a of the bush 55 is in contact with the supporting block 46. An end part of a second shaft 56 extending in a direction perpendicular to the direction of the axial center connecting line O and the axial direction of the input shaft 10 and mounted with the first roller follower 47 is coupled to the second supporting portion 44. The second supporting portion 44 is moved in the axial direction of the input shaft 10 by a pressing force applied to the first roller follower 47. According to a movement of the second supporting portion 44 in the axial direction of the input shaft 10, the first supporting portion 43 and the holding portion 41 supporting the pressing roller 40 rotate about the rotary shaft 52.

The first supporting portion 43 is provided to form a clearance between the needle bearing 53 and the tilt shaft 42a in the direction of the axial center connecting line O. The tilt shaft 42b supported on the second supporting portion 44 is in contact with the needle bearing 54 via the bulging surface. In this way, the tilt shafts 42a, 42b are supported on the first and second supporting portions 43, 44 rotatably and inclinably with respect to the axial center connecting line O.

The holding portion 41 is provided between the first and second supporting portions 43, 44 and mounted on the tilt shafts 42a, 42b. The holding portion 41 is rotated and inclined integrally with the tilt shafts 42a, 42b.

A first shaft portion 57 is fixed to the holding portion 41. When viewed in the axial direction of the input shaft 10, the first shaft portion 57 coincides with the axial center connecting line O if the tilt shafts 42a, 42b extend in a direction perpendicular to the axial center connecting line O. Further, the first shaft portion 57 is provided in parallel to disc surfaces of the discs 11, 12 in FIG. 4.

The pressing roller 40 is rotatably supported on the first shaft portion 57 via a needle bearing 91. Since the first shaft portion 57 is parallel to the disc surfaces of the discs 11, 12, the pressing roller 40 is perpendicular to the disc surfaces of the discs 11, 12.

A movement of the needle bearing 91 in the axial direction is regulated by a step portion 57s formed on the first shaft portion 57 and a spacer 92 externally fitted on the first shaft portion 57. This prevents the needle bearing 91 from being shifted in the axial direction to come into contact with the holding portion 41 and obstruct the rotation of the pressing roller 40.

The pressing roller 40 is in contact with the side disc 12b and rotates about the first shaft portion 57 in the disc overlap region. When a pressing force transmitted via the first roller follower 47 increases, the pressing roller 40 elastically deforms the discs 11, 12 to form the torque transmission contact portion.

In the torque transmission contact portion, a slip due to a speed difference between the pressing roller 40 and the side disc 12b increases in a region on the side of the input shaft 10 and a region on the side of the output shaft 14 in the torque transmission contact portion. Particularly, since the pressing roller 40 is slower than the side disc 12b in the region on the side of the input shaft 10, a force in a direction to suppress the rotation of the side disc 12b acts on the side disc 12b from the pressing roller 40, thereby creating a transmission loss (slip loss) of the rotation and the torque.

Thus, the slip loss is suppressed by setting a surface roughness Ra of a surface of the side disc 12b on the side of the pressing roller 40 smaller than that of an opposite surface, preferably at 0.1 or lower to reduce the force in the direction to suppress the rotation of the side disc 12b acting on the side disc 12b from the pressing roller 40.

Thrust needle bearings 93 for supporting a thrust load acting on the pressing roller 40 from the discs 11, 12 during speed change are arranged between side surfaces of the pressing roller 40 and the holding portion 41. Thrust washers may be arranged instead of the thrust needle bearings 93.

Biasing forces of springs 60 of biasing portions 45a, 45b act on the pressing roller 40 via the holding portion 41.

As shown in FIG. 5, the second shafts 56 coupled to the second supporting portions 44 are inserted into inner peripheral holes 47a of the first roller followers 47 and the first roller followers 47 roll in contact with side surfaces 67a, 68a of a front clamp arm 67 and a rear clamp arm 68 on the side of the discs 11, 12.

An end part of the second shaft 56 opposite to that coupled to the second supporting portion 44 is inserted into a hole 48a formed on the roller follower support block 48. The hole 48a is an oval hole formed along the axial direction of the input shaft 10. The roller follower supporting block 48 supports the second shaft 56 slidably in the axial direction of the input shaft 10 along the hole 48a. Further, the roller follower supporting block 48 is coupled to the bracket 37 via the first shaft 38 extending in the direction of the axial center connecting line O and moves in the direction of the axial center connecting line O according to a movement of the bracket 37.

The disc clamping mechanism 31 includes an arm shaft 65, the front clamp arm 67 and the rear clamp arm 68.

The arm shaft 65 is a cylindrical member extending in a direction perpendicular to the axial center connecting line O and the input shaft 10. The arm shaft 65 is provided to perpendicularly intersect with the input shaft 10 and overlap a center of the primary disc 11 in the axial direction of the input shaft 10 as shown in FIG. 5.

The front clamp arm 67 is a substantially L-shaped plate-like member as shown in FIG. 3. The front clamp arm 67 is rotatably supported on the arm shaft 65 on one end part side. The other end part of the front clamp arm 67 is formed with an engaging portion 72 of the pressing force adjusting mechanism 32 to be described later. As shown in FIG. 5, the side surface 67a (surface forming a thickness of the plate-like member) of the front clamp arm 67 on the side of the discs 11, 12 is in contact with the first roller follower 47.

The rear clamp arm 68 is a substantially L-shaped plate-like member as shown in FIG. 3. The rear clamp arm 68 is rotatably supported on the arm shaft 65 on one end part side. The other end part of the rear clamp arm 68 is coupled to a case 70 of the pressing force adjusting mechanism 32 to be described later. As shown in FIG. 5, the side surface 68a (surface forming a thickness of the plate-like member) of the rear clamp arm 68 on the side of the discs 11, 12 is in contact with the first roller follower 47.

The front and rear clamp arms 67, 68 are rotated about the arm shaft 65 by a pressing force generated by the pressing force adjusting mechanism 32 to sandwich the pair of pressing roller mechanisms 30, whereby the pressing force is caused to act on the holding portions 41 and act on the primary disc 11 and the secondary disc 12 from the pressing rollers 40.

As shown in FIG. 3, the pressing force adjusting mechanism 32 includes the case 70, a second shaft portion 71, the engaging portion 72, a rotating portion 73, a compression spring 74 and an unillustrated pressing force adjusting actuator.

The case 70 is coupled to an end part of the rear clamp arm 68. The case 70 houses a part of the rotating portion 73 and the second shaft portion 71 is mounted thereon.

The second shaft portion 71 is a cylindrical member parallel to the arm shaft 65 and rotatably supports the rotating portion 73.

The engaging portion 72 is formed on an end part of the front clamp arm 67 and includes a coupling portion 75 extending from this end part toward the rear clamp arm 68 and a curved surface portion 76 extending from an end part of the coupling portion 75 on the side of the rear clamp arm 68 to surround the second shaft portion 71. The curved surface portion 76 includes an arcuate outer peripheral wall centered on the second shaft portion 71. A second roller follower 79 of the rotating portion 73 rolls in contact with the outer peripheral wall of the curved surface portion 76.

The rotating portion 73 includes a rotary body 77, a rotation transmitting block 78 and the second roller follower 79. The rotary body 77 includes a first body 80 and a second body 81.

The first body 80 is a substantially U-shaped member extending to sandwich the second shaft portion 71. The first body 80 is in contact with an outer peripheral wall of the second shaft portion 71 and is rotatably and slidably supported by the second shaft portion 71. On an open end part, the first body 80 includes a stopper 82 for supporting one end part of the compression spring 74.

The second shaft portion 71 penetrates through the rotation transmitting block 78 and the rotation transmitting block 78 is rotatably supported by the second shaft portion 71. The rotation transmitting block 78 supports an end part of the compression spring 74 opposite to the end part supported by the stopper 82.

The first and second bodies 80, 81 are joined and the second roller follower 79 is mounted on the second body 81.

The rotary body 77 is constantly biased in a direction from the second shaft portion 71 toward the stopper 82 by a restoring force of the compression spring 74. However, the second body 81 located at a side of the second shaft portion 71 opposite to the compression spring 74 is in contact with the rotation transmitting block 78 and a movement of the rotary body 77 in a direction from the second shaft portion 71 toward the compression spring 74 is regulated.

The second roller follower 79 rolls in contact with the arcuate outer peripheral wall of the curved surface portion 76. The second roller follower 79 is rotated about the second shaft portion 71 integrally with the rotary body 77 by the unillustrated pressing force adjusting actuator and constantly biased toward the second shaft portion 71 by the compression spring 74.

The pressing force adjusting mechanism 32 changes a direction of a force for biasing the second roller follower 79 toward the second shaft portion 71 by the compression spring 74 by rotating the second roller follower 79 about the second shaft portion 71. In this way, a force for pushing the front clamp arm 67 toward the rear clamp arm 68, i.e. a pressing force for sandwiching the pair of pressing roller mechanisms 30 is changed.

Next, functions and effects of the first embodiment are described.

In the first embodiment, the pressing roller 40 is supported on the first shaft portion 57 via the needle bearing 91.

The needle bearing 91 for receiving a load not by balls, but by needles has a large allowable load and a high allowable rotation speed as compared with ball bearings. Thus, if a requested allowable load and an allowable rotation speed are the same, a needle bearing having a smaller diameter than in the case of using a ball bearing can be used and the miniaturization of the pressing roller 40 and, consequently, the miniaturization of the transmission 3 can be realized.

Further, since the needle bearing 91 includes many needles despite a small diameter thereof, a difference in force for pressing the discs 11, 12 by the pressing rollers 40 is small between the case where the pressing rollers 40 are pressed in a state where the discs 11, 12 are right below the needles and the case where the pressing rollers 40 are pressed in a state where the discs 11, 12 are located right below clearances between the needles. Thus, a variation of the torque transmittable by the transmission 3 due to a variation of the pressing force can be suppressed.

Further, the first shaft portion 57 for supporting the pressing roller 40 is arranged in parallel to the disc surfaces of the discs 11, 12 so that the pressing roller 40 is perpendicular to the discs 11, 12. This makes a width of the holding portion 41 in the direction of the axial center connecting line O smaller, enables the pressing roller 40 to be displaced to a position close to the input shaft 10 or the output shaft 14 and enables the range of the speed ratio realizable by the transmission 3 to be enlarged.

Further, the force in the direction to suppress the rotation of the side disc 12b acting on the side disc 12b from the pressing roller 40 can be reduced by setting the surface roughness of the surface of the side disc 12b on the side of the pressing roller 40 smaller than that of the opposite surface, and the slip loss can be suppressed.

### <Second Embodiment>

Next, a second embodiment of the present invention is described. The second embodiment differs from the first embodiment in the pressing rollers 40 and supporting structures therefor.

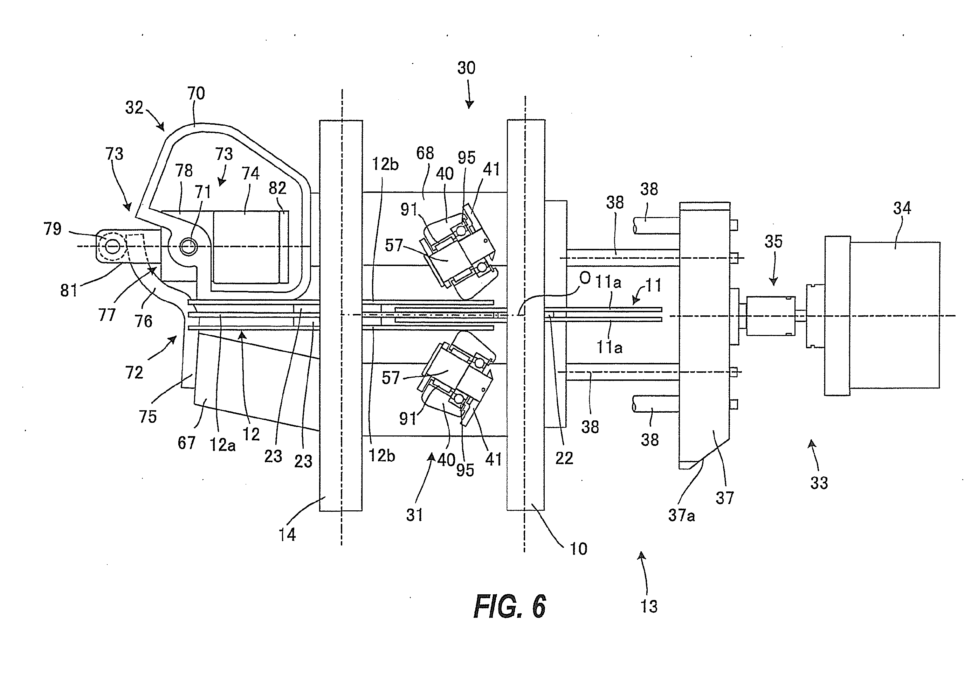

FIG. 6 shows a part of the first embodiment corresponding to FIG. 4 (cross-section along IV-IV of FIG. 2) and shows pressing rollers 40 and supporting structures therefor in the second embodiment.

The first shaft portion 57 supporting the pressing roller 40 is inclined with respect to disc surfaces of discs 11, 12 to be closer to the disc surfaces toward an output shaft 14. This causes the pressing roller 40 to be inclined toward the output shaft 14 with respect to the disc surfaces of the discs 11, 12 and suppresses a slip due to a speed difference between the pressing roller 40 and a side disc 12b generated in an input shaft side region and an output shaft side region of a torque transmission contact portion.

The pressing roller 40 is rotatably supported on the first shaft portion 57 via a needle bearing 91 and a ball bearing 95. Since the ball bearing 95 has only to support a thrust load when the pressing roller 40 is pressed against the discs 11, 12 and a thrust load during speed change, a requested allowable load is low and it is possible to use a ball bearing having a smaller diameter than in the case of supporting the pressing roller 40 only by the ball bearing and supporting both a radial load and these thrust loads only by the ball bearing.

Accordingly, also by the second embodiment, the pressing roller 40 can be miniaturized and a variation of a pressing force can be suppressed as compared with the configuration for supporting the pressing roller 40 only by the ball bearing.

Further, since a slip of the pressing roller 40 and a slip loss thereby are suppressed by inclining the pressing roller 40 with respect to the discs 11, 12, the slip loss can be efficiently suppressed even if a surface roughness of the side disc 12b against which the pressing roller 40 is pressed is large.

Although the embodiments of the present invention have been described above, the above embodiments are merely some application examples of the present invention and not of the nature to limit the technical scope of the present invention to the specific configurations of the above embodiments.

The present application claims a priority of Japanese Patent Application No. 2013-7851 filed with the Japan Patent Office on January 18, 2013, all the contents of which are hereby incorporated by reference.

## Claims

1. A multi-disc transmission, comprising:
an input shaft configured such that rotation from a power source is input to the input shaft;
an output shaft arranged in parallel to the input shaft;
a primary disc provided on the input shaft;
a secondary disc provided on the output shaft, the secondary disc including a disc overlap region overlapping the primary disc,
a pair of pressing rollers arranged in the disc overlap region with the primary disc and the secondary disc interposed therebetween, the pair of pressing rollers being supported on shaft portions via needle bearings;
a shifting actuator configured to move the pair of pressing rollers between the input shaft and the output shaft; and
a pressing mechanism configured to press the pair of pressing rollers against the primary disc and the secondary disc by causing a pressing force to act on the pair of pressing rollers.

2. The multi-disc transmission according to claim 1, wherein:
the shaft portions are parallel to disc surfaces of the primary disc and the secondary disc.

3. The multi-disc transmission according to claim 2, wherein:
a surface roughness of a disc held in contact with the pressing roller out of the primary disc and the secondary disc is smaller on a surface located on the side of the pressing roller than on a surface opposite to the pressing roller.

4. The multi-disc transmission according to claim 1, wherein:
the shaft portions are inclined with respect to disc surfaces of the primary disc and the secondary disc to be closer to the disc surfaces toward the output shaft.
